(19) Europäisches Patentamt
European Patent Office
Office européen des brevets

(11) EP 1 902 110 B1

(12) **EUROPÄISCHE PATENTSCHRIFT**

(45) Veröffentlichungstag und Bekanntmachung des Hinweises auf die Patenterteilung:
**10.11.2010 Patentblatt 2010/45**

(21) Anmeldenummer: **05850428.3**

(22) Anmeldetag: **02.12.2005**

(51) Int Cl.:
***C09J 7/02*** *(2006.01)* ***G02F 1/13357*** *(2006.01)*
***B32B 27/08*** *(2006.01)* ***B32B 15/08*** *(2006.01)*

(86) Internationale Anmeldenummer:
**PCT/EP2005/056405**

(87) Internationale Veröffentlichungsnummer:
**WO 2006/133743 (21.12.2006 Gazette 2006/51)**

(54) **DOPPELSEITIGE HAFTKLEBEBÄNDER ZUR HERSTELLUNG BZW. VERKLEBUNG VON LC-DISPLAYS MIT LICHTABSORBIERENDEN EIGENSCHAFTEN**

DOUBLE-SIDED PRESSURE-SENSITIVE ADHESIVE TAPES FOR PRODUCING OR BONDING LC DISPLAYS WITH LIGHT-ABSORBING PROPERTIES

BANDES ADHESIVES DOUBLE FACE A PROPRIETES D’ABSORPTION DE LA LUMIERE, POUR LA FABRICATION OU LE COLLAGE D’AFFICHEURS A CRISTAUX LIQUIDES

(84) Benannte Vertragsstaaten:
**DE ES FR GB IT**

(30) Priorität: **13.06.2005 DE 102005027391**

(43) Veröffentlichungstag der Anmeldung:
**26.03.2008 Patentblatt 2008/13**

(73) Patentinhaber: **TESA SE**
**20253 Hamburg (DE)**

(72) Erfinder:
- **HUSEMANN, Marc**
**22605 Hamburg (DE)**
- **STORBECK, Reinhard**
**22457 Hamburg (DE)**

(56) Entgegenhaltungen:
**WO-A-2005/019367 US-A1- 2004 028 895**

- **PATENT ABSTRACTS OF JAPAN Bd. 2003, Nr. 04, 2. April 2003 (2003-04-02) -& JP 2002 350612 A (DAINIPPON INK & CHEM INC), 4. Dezember 2002 (2002-12-04) in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 902 110 B1

## Beschreibung

Die Erfindung betrifft doppelseitige Haftklebebänder mit mehrschichtigen Trägeraufbauten und mit lichtabsorbierenden Eigenschaften zur Herstellung bzw. zur Verklebung von Flüssigkristall-Datenanzeigen (Liquid Crystal Displays, LCDs).

Haftklebebänder sind im Zeitalter der Industrialisierung weit verbreitete Verarbeitungshilfsmittel. Insbesondere für den Einsatz in der Computerindustrie werden an Haftklebebänder sehr hohe Anforderungen gestellt. Neben einem geringen Ausgasungsverhalten sollten die Haftklebebänder in einem weiten Temperaturbereich einsetzbar sein und bestimmte optische Eigenschaften erfüllen.

Ein Einsatzgebiet sind optische Flüssigkristall-Datenanzeigen (Liquid Crystal Displays, LCDs), die für Computer, Fernsehgeräte, Laptops, PDAs, Mobiltelefone, Digitalkameras etc. benötigt werden.

In diesen Bereich werden rund um LC-Displays sehr häufig so genannte Spacer Tapes eingesetzt, die lichtabsorbierende Funktionen besitzen. Zum einen soll vermieden werden, dass Licht von außen in das Display einfällt. Zum anderen soll von der Lichtquelle des LC-Displays ausgehend kein Licht nach außen drängen.

Es besteht ein Trend in dieser Industrie zu leichteren Geräte-Einheiten mit höherer Auflösung und zu immer größeren LC-Displays. Mit diesem Trend sind auch stärkere und immer effizientere Lichtquellen verbunden, die wiederum höhere Anforderungen an die lichtabsorbierenden Eigenschaften des Klebebandes stellen.

Für diese Anwendung werden häufig schwarze doppelseitige Klebebänder eingesetzt. Zur Herstellung dieser Klebebänder und der dafür erforderlichen Träger existieren viele Konzepte.

Eine vorgeschlagene Lösung stellt die Einfärbung der Haftklebemasse dar. Hier wird z.B. durch Zusatz von Rußpartikeln oder schwarzen Farbpigmenten eine vollständige Absorption des Lichtes erreicht. Dieses Verfahren ist einfach, weist aber auch verschiedene Nachteile auf. Im Produktionsprozess müssen die Rußpartikel oder schwarzen Farbpigmente aufwendig in die Klebemasse eingerührt werden. Hierdurch findet eine starke Einschwärzung (Verdrekkung) des Produktionsmaterials statt, welches dann aufwendig wieder gereinigt werden muss, wenn konventionelle Haftklebemassen ohne Einfärbung verarbeitet werden sollen. Ein weiterer Nachteil ist, dass die Absorption des Lichtes durch die Schichtdicke der Klebemasse beeinflusst wird. Insbesondere bei dünneren Klebemassenschichtdicken nimmt die Absorption des Lichtes deutlich ab. Beim Einsatz in LC-Displays sind unterschiedliche Schichtdicken durchaus üblich, da verschiedene Hersteller unterschiedliche Anforderungen an die Klebfestigkeiten stellen. Ein weiterer Nachteil des Konzeptes der Einfärbung der Klebemasse besteht darin, **dass** durch den Ruß- oder Farbpigmentzusatz die klebtechnischen Eigenschaften der Klebemasse verändert werden, welches ebenfalls unerwünscht ist.

Ein zweites Konzept zur Herstellung von schwarzen doppelseitigen Haftklebebändern besteht in der Einfärbung der Trägermaterials. In der Elektronik-Industrie werden sehr bevorzugt doppelseitige Haftklebebänder mit PET-Trägern eingesetzt, da diese sich sehr gut stanzen lassen. Die PET-Träger kann man ebenfalls mit Ruß oder schwarzen Farbpigmenten einfärben, um eine Absorption des Lichtes zu erreichen.

Der Nachteil dieses bestehenden Konzeptes ist die geringe Absorption des Lichtes. In sehr dünnen Trägerschichten lassen sich nur eine relativ geringe Anzahl Ruß- oder anderer schwarzer Pigmentpartikel einbringen; mit der Folge, dass keine vollständige Absorption des Lichtes erreicht wird. Mit dem Auge und auch mit intensiveren Lichtquellen, wie z.B. einem Laserpointer, kann dann die mangelnde Absorption ermittelt werden.

Ein drittes Konzept zur Herstellung von schwarzen doppelseitigen Haftklebebändern betrifft die Herstellung eines zweischichtigen oder dreischichtigen Trägermaterials mittels Coextrusion. Trägerfolien werden in der Regel über Extrusion hergestellt. Durch die Coextrusion wird neben dem konventionellen Trägermaterial ein zweite und optional auch eine dritte schwarze Schicht coextrudiert, die die Funktion der Lichtabsorption erfüllt. Auch dieses Konzept weist verschiedene Nachteile auf.

Ein Problem sind z.B. die Schichtdicken, da die zwei bzw. drei Schichten zunächst einzeln in der Düse geformt werden und sich somit insgesamt nur relativ dicke Trägerschichten realisieren lassen, mit der Folge, dass die Folie relativ dick und unflexibel wird und sich somit an die zu verklebenden Flächen nur noch schlecht anpasst. Zudem muss die schwarze Schicht ebenfalls relativ dick sein, da ansonsten keine vollständige Absorption realisiert werden kann. Ein weiterer Nachteil besteht in den veränderten mechanischen Eigenschaften des Trägermaterials, da zumindest eine schwarze Schicht coextrudiert wird, die andere mechanische Eigenschaften wie das ursprüngliche Trägermaterial (z.B. PET) aufweist. Ein weiterer Nachteil für die zweischichtige Version des Trägermaterials ist die unterschiedliche Verankerung der Klebemasse auf dem coextrudierten Trägermaterial. Für diesen Fall der Ausführungsform ist immer eine Schwachstelle im doppelseitigen Klebeband enthalten.

In einem vierten Konzept werden Folien metallisiert und dann anschließend schwarz lackiert. Dieser Prozess liefert sehr gute Ergebnisse in Bezug auf die Lichtabsorptionseigenschaften, ist in der Umsetzung aber relativ aufwendig, da die Metallisierung und Beschichtung in unterschiedlichen Arbeitsgängen vorgenommen werden muss.

Des Weiteren ist die Dimensionsstabilität der Folie reduziert, da Metall und Polymerfolie unterschiedliche Ausdehnungskoeffizienten besitzen und somit z.B. im Herstellungsprozess des Klebebandes unter Temperatureinwirkung die Folie sich am Rand aufrollt und das fertige Klebeband nur eine mangelhafte Planlage besitzt.

In der JP 2002-235053 werden doppelseitige Klebebänder für LCD-Anwendungen beschrieben, die auf schwarz eingefärbter Masse basieren. Die damit verbundenen Nachteile wurden bereits weiter oben beschrieben.

In der JP 2002-350612 werden doppelseitige Klebebänder für LCD-Panels mit lichtschützenden Eigenschaften beschrieben. Die Funktion wird durch eine Metallschicht, welche ein- oder beidseitig auf die Trägerfolie aufgetragen ist, erreicht, wobei die Trägerfolie zusätzlich noch eingefärbt sein kann. Durch die Metallisierung ist die Herstellung des Klebebandes relativ aufwendig und das Klebeband selbst besitzt eine mangelhafte Planlage.

Die US 2004/028895 A beschreibt ein Klebeband zur Herstellung von LC-Displays bestehend aus einer Trägerfolie, die beidseitig mit einer Haftkleberschicht versehen ist. Zwischen der Trägerfolie und der Haftkleberschicht befindet sich zumindest eine schwarze Schicht. Zwischen dieser schwarzen Schicht und der Trägerfolie ist eine lichtreflektierende Metallschicht vorhanden.

Die WO 2005/019367 A offenbart ebenfalls eine Klebeband zur Herstellung von LC-Displays aus einer beidseitig mit einer Haftklebeschicht versehenen Trägerfolie. Auf beiden Seiten der Trägerfolie wurden schwarze Schichten aufgebracht. Zwischen einer dieser schwarzen Schichten und der Haftklebeschicht ist zusätzlich eine reflektierende Metallschicht vorhanden.

In der JP 2002-023663 werden ebenfalls doppelseitige Klebebänder für LCD-Panels mit lichtschützenden Eigenschaften beschrieben. Auch hier wird die Funktion durch eine Metallschicht, welche ein- oder beidseitig auf die Trägerfolie aufgetragen ist, erreicht. Weiterhin umfasst das Patent auch eingefärbte Klebemassen. Die damit verbundenen Probleme wurden bereits diskutiert.

Für die Verklebung von LCD-Displays bzw. zur deren Herstellung besteht somit der Bedarf für doppelseitige Haftklebebänder, welche die oben beschriebenen Mängel nicht oder nur in verminderter Weise aufweisen.

Aufgabe der Erfindung ist es daher, ein doppelseitiges Haftklebeband zur Verfügung zu stellen, welches ein hohes Lichtabsorptionsvermögen besitzt, welches sich mit einem Träger auch mit Schichtdicken unterhalb 20 $\mu$m realisieren lässt, um optimale klebtechnische Eigenschaften zu erreichen, und bei welchem der Träger eine hohe Dimensionsstabilität unter Temperatureinwirkung besitzt.

Gelöst wird die Aufgabe durch Haftklebebänder, wie sie im Hauptanspruch dargestellt sind. Die Unteransprüche betreffen vorteilhafte Ausführungen der erfindungsgemäßen Haftklebebänder sowie deren Verwendung.

Der Hauptanspruch betrifft entsprechend ein Haftklebeband, insbesondere zur Herstellung oder Verklebung von optischen Flüssigkristall-Datenanzeigen (LCDs), aufweisend eine Ober- und eine Unterseite, weiterhin aufweisend eine Trägerfolie mit einer Ober-und einer Unterseite, wobei das Haftklebeband sowohl auf seiner Ober- und seiner Unterseite mit jeweils zumindest einer äußeren Haftklebeschicht ausgerüstet ist, wobei weiterhin zumindest auf einer Seite der Folie zwischen der äußeren Haftklebemassenschicht und der Trägerfolie zumindest zwei schwarze Schichten vorgesehen sind, zwischen denen zumindest eine silberfarbene Lackschicht auf Basis einer aushärtenden Bindermatrix umfassend silberne Farbpigmente (im folgenden als "silberfarbene Schicht" bezeichnet) vorhanden ist.

Diese Anordnung zweier schwarzer Schichten, zwischen denen zumindest eine silberfarbene Schicht vorgesehen ist, wird im Folgenden auch als Drei-Schichten-Anordnung bezeichnet.

In einer vorteilhaften Vorgehensweise sind auf beiden Seiten der Trägerfolie Drei-Schichten-Anordnungen vorgesehen.

In einer vorteilhaften Ausgestaltung der Erfindung ist zumindest eine der beiden äußeren Haftklebeschichten transparent, insbesondere diejenige auf der Seite des Haftklebebandes, auf welcher die Drei-Schichten-Anordnung vorgesehen ist.

Vorteilhaft können beide äußeren Haftklebeschichten transparent ausgestaltet sein, besonders vorteilhaft auch in den Fällen, in denen beidseitig von der Trägerfolie Drei-Schichten-Anordnungen vorgesehen sind.

Die Haftklebeschichten (d) und (d') auf den beiden Seiten des erfindungsgemäßen Haftklebebandes können jeweils identisch oder unterschiedlich sein, insbesondere was ihre Ausgestaltung (Schichtdicke und dergleichen) und ihre chemische Zusammensetzung angeht. In besonders bevorzugter Weise ist die Haftklebemasse zumindest auf der Seite des Haftklebebandes transparent, und zwar bevorzugt auf der Seite - von der Trägerfolie aus gesehen -, auf der die die Drei-Schichten-Anordnung schwarz-silber-schwarz vorgesehen ist. Es kann im erfinderischen Sinne aber auch vorteilhaft sein, die Haftklebemassen auf beiden Seiten des Haftklebebandes transparent auszuführen.

Sehr bevorzugt handelt es sich bei einer oder bei mehreren der schwarzen Schichten um Lackschichten.

In bevorzugten Ausführungen der Erfindung sind weitere schwarze Schichten in dem Klebeband vorgesehen.

Im Folgenden werden einige vorteilhafte Ausführungsformen des erfindungsgemäßen Klebebandes dargestellt, ohne sich die die Wahl der Beispiele in der Erfindung unnötig beschränken zu wollen.

In einer ersten Vorteilhaften Ausführungsform der Erfindung, wie sie in Figur 1 dargestellt ist, besteht das erfinderische Haftklebeband aus einer Trägerfolienschicht (a), einem mehrschichtigen Farblackaufbau aus zumindest zwei schwarzen Farbschichten (b) sowie einer silberfarbenen und nicht transparenten Farbschicht (c), und zwei Haftklebeschichten (d) und (d').

In einer weiteren bevorzugten Ausführungsform der Erfindung besitzt das erfinderische Haftklebeband den in Figur 2 dargestellten Produktaufbau. Hier besteht das doppelseitige Haftklebeband aus einer Trägerfolie (a), zumindest

vier schwarzen Lackschichten (b), zumindest zwei silberfarbenen und nicht transparenten Farbschichten (c), die jeweils von zwei der schwarzen Schichten eingeschlossen sind, und zwei Haftklebeschichten (d) und (d'). In vorteilhafter Weise können hier beide Haftklebemassenschichten (d) und (d') transparent sein.

In einer dritten bevorzugten Ausführungsform der Erfindung besitzt das erfinderische Haftklebeband den Produktaufbau gemäß Figur 3. Hier besteht das doppelseitige Haftklebeband aus einer Trägerfolie (a), zumindest drei schwarzen Lackschichten (b), zumindest einer silberfarbenen und nicht transparenten Farbschicht (c) und zwei Haftklebeschichten (d) und (d'), wobei die Haftklebemassen identisch oder sich voneinander unterscheiden können. Auf der Trägerrückseite (von der Dreischichtenanordnung aus gesehen) ist hier, ausgehend von der Ausführungsvariante in Figur 1, eine weitere schwarze Schicht vorgesehen.

In einer beispielhaft in Figur 4 dargestellten weiteren bevorzugten Ausführungsform der Erfindung besteht das doppelseitige Haftklebeband aus einer Trägerfolie (a), zumindest drei schwarzen Lackschichten (b), ($b_1$), ($b_2$), wobei zumindest zwei Lackschichten ($b_1$), ($b_2$) übereinander lackiert sind [die Indizes 1 und 2 dienen bei zwei identischen Lackschichten im Wesentlichen zur sprachlichen und grafischen Unterscheidung der Schichten, es können aber auch zwei schwarze Lackschichten unterschiedlicher Art vorgesehen sein], zumindest einer silberfarbenen und nicht transparenten Farbschicht (c) und zwei Haftklebeschichten (d) und (d'), wobei die Haftklebemassen identisch oder sich voneinander unterscheiden können. Die doppelte Lackschicht liegt im dargestellten Beispiel auf der trägerabgewandten Seite der silberfarbenen Schicht, während hier auf der trägernäherliegenden Seite eine einfache Lackschicht vorgesehen ist.

Für eine Variante dieser Ausführungsform kann die doppelte Lackschicht auch auf der trägernäherliegenden Seite, gesehen von der silberfarbenen Schicht aus, vorgesehen sein. Auf der trägerabgewandten Seite können dann eine oder ebenfalls zwei Lackschichten vorgesehen sein.

In einer weiteren bevorzugten Ausführungsform der Erfindung (siehe hierzu Figur 5) besteht das doppelseitige Haftklebeband aus einer Trägerfolie (a), zumindest vier schwarzen Lackschichten (b), wobei zumindest jeweils zwei Lackschichten ($b_1$), ($b_2$) übereinander lackiert sind, zumindest einer silberfarbenen und nicht transparenten Farbschicht (c), und wobei die Trägerfolie beidseitig mit zumindest jeweils einer schwarzen Farbschicht (b) versehen ist, und zwei Haftklebeschichten (d) und (d').

In einer weiteren bevorzugten, in Figur 6 dargestellten Ausführungsform der Erfindung besteht das doppelseitige Haftklebeband aus einer Trägerfolie (a), zumindest sechs schwarzen Lackschichten (b), wobei zumindest jeweils zwei Lackschichten ($b_1$), ($b_2$) beidseitig der Trägerfolie (a) übereinander lackiert sind, zumindest zwei silberfarbenen und nicht transparenten Farbschicht (c) auf jeder Seite der Trägerfolie (a), die Trägerfolie zumindest beidseitig schwarz lackiert ist mit einer Farbschicht (b) und zwei Haftklebeschichten (d) und (d'), wobei die Haftklebemassen identisch oder sich voneinander unterscheiden können.

Im Folgenden wird die Erfindung weiter erläutert:

Alle angegebenen Grenzwerte sind als Inklusivwerte zu verstehen, also im angegebenen Grenzbereich enthalten.

Die Trägerfolie (a) ist bevorzugt zwischen 5 und 100 μm, mehr bevorzugt zwischen 8 und 50 μm, äußerst bevorzugt zwischen 12 und 23 μm dick und sehr bevorzugt transparent oder semitransparent oder lichtundurchlässig.

Vorteilhaft können die farbtragenden Schichten direkt auf die Trägerfolie bzw. die bereits auf diese beschichten Farbschichten aufgebracht werden. Die Schichten (b) sind schwarz und lichtabsorbierend. Der Masseauftrag des schwarzen Lackes beträgt pro Schicht bevorzugt zwischen 0,5 und 3 g/m$^2$. Die Schicht (c) ist silberfarbig und lichtundurchlässig. Der Masseauftrag des silbernen Lackes beträgt vorteilhaft zwischen 0,5 und 3 g/m$^2$. Die Haftklebemasseschichten (d) und (d') besitzen bevorzugt eine Dicke von jeweils zwischen 5 μm und 250 μm. Die einzelnen Schichten (b), (c), (d) und (d') können sich innerhalb des doppelseitigen Haftklebebandes im Hinblick auf die Schichtdicke unterscheiden können, so dass z.B. unterschiedlich dicke Haftklebemassenschichten aufgetragen werden können, oder einzelne, mehrere oder auch alle Schichten können identisch gewählt werden.

<u>Trägerfolie (a)</u>

Als Folienträger können prinzipiell alle filmischen Polymerträger eingesetzt werden, insbesondere solche, die transparent, semitransparent oder lichtundurchlässig sind. So lassen sich z.B. Polyethylen, Polypropylen, Polyimid, Polyester, Polyamid, Polymethacrylat, fluorierte Polymerfolien, etc. einsetzen. In einer besonders bevorzugten Ausführungsform werden Polyesterfolien eingesetzt, besonders bevorzugt PET-Folien (Polyethylenterephthalat). Die Folien können entspannt sein oder eine oder mehrere Vorzugsrichtungen aufweisen. Vorzugsrichtungen werden erzielt durch Streckung in eine oder in zwei Richtungen.

Insbesondere bevorzugt werden 12 μm dünne PET-Folien oder dünnere Folien eingesetzt. 12 μm PET Folien lassen sehr gute klebtechnische Eigenschaften für das doppelseitige Klebeband zu, da hier die Folie sehr flexibel ist und sich gut den Oberflächenrauhigkeiten der zu verklebenden Substrate anpassen kann.

Zur Verbesserung der Verankerung der Lackschichten ist es sehr vorteilhaft, wenn die Folien vorbehandelt

werden. Die Folien können geätzt sein (z.B. mit Trichloressigäure oder Trifluoressigsäure), mit Corona oder Plasma vorbehandelt sein oder mit einem Primer (z.B. Saran) ausgestattet sein. Der Primer kann optional auch noch eingefärbt sein, um die lichtabsorbierenden Eigenschaften zu verbessern.

Des Weiteren können vorteilhaft - insbesondere wenn ein transparentes oder semitransparentes Folienmaterial vorliegt - Farbpigmente oder farbtragende Partikel zum Folienmaterial hinzugegeben werden. So eignen sich z.B. Ruß zur Schwarzfärbung und Titandioxidpartikel zur Weißfärbung. Durch diese Einfärbung wird die Lichtdurchlässigkeit weiter reduziert. Die Pigmente oder Partikel sollten aber bevorzugt kleiner im Durchmesser sein als die finale Schichtdicke der Trägerfolie. Optimale Einfärbungen lassen sich mit 10 bis 40 Gew.-% Partikelanteilen, bezogen auf das Folienmaterial, erzielen.

Farbschichten (b), ($b_1$), ($b_2$)

Die Farbschichten (b), ($b_1$), ($b_2$) erfüllen die Funktion der Schwarzfärbung zumindest einer Seite des Klebebandes. Für die Absorption des Lichtes im LC-Display ist es vorteilhaft, wenn das doppelseitige Haftklebeband in einem Wellenlängenbereich von 300 - 800 nm eine Transmission von < 1 % besitzt.

In Rahmen dieser Erfindung tragen die schwarzen Lackschichten dazu bei. In einer aushärtenden Bindermatrix (bevorzugt thermisch aushärtendes System, aber auch strahlenhärtendes System möglich) werden schwarze Farbpigmente in die Lackmatrix ein-gemischt. Als Lackmaterialien können z.B. Polyester, Polyurethane, Polyacrylate oder Polymethacrylate eingesetzt werden, insbesondere in Verbindung mit den für den Fachmann bekannten Lackadditiven. In einer sehr zu bevorzugenden erfinderischen Ausführungsform werden als farbtragende Partikel Ruß oder Graphitpartikel in die Bindermatrix eingemischt. Durch diese Additivierung wird bei sehr hohem Additivierungsgehalt (> 20 Gew.-%), neben der im Wesentlichen vollständigen Lichtabsorption, zusätzlich eine elektrische Leitfähigkeit erzielt, so dass die erfinderischen doppelseitigen Haftklebebänder ebenfalls antistatische Eigenschaften aufweisen.

Farbschichten (c)

Die Farbschicht (c) erfüllt die Funktion einer Schicht zur Verringerung der Lichttransmission. Die Schicht(en) (c) tragen somit auch dazu bei, die Absorption des Lichtes im LC-Display des doppelseitigen Haftklebebandes zu verringern, wobei es insbesondere vorteilhaft ist, in einem Wellenlängenbereich von 300 - 800 nm die Transmission auf < 1 % zu verringern.

In einer aushärtenden Bindermatrix (bevorzugt thermisch aushärtendes System, aber auch strahlenhärtendes System möglich) werden silberne (besonders silbern-metallische und/oder silberfarbene) Farbpigmente in die Lackmatrix eingemischt. Als Lackmaterialien können z.B. Polyester, Polyurethane, Polyacrylate oder Polymethacrylate eingesetzt werden, insbesondere in Verbindung mit den für den Fachmann bekannten Lackadditiven. In einer sehr zu bevorzugenden erfinderischen Ausführungsform werden als silberfarbene farbtragende Pigmente Metallpartikel in die Bindermatrix eingemischt. Durch diese Additivierung wird bei sehr hohem Additivierungsgehalt (> 20 Gew.-%), neben der im Wesentlichen vollständigen Lichtabsorption, zusätzlich eine elektrische Leitfähigkeit erzielt, so dass die erfinderischen doppelseitigen Haftklebebänder ebenfalls antistatische Eigenschaften aufweisen.

Haftklebemassen (d) und (d')

Die Haftklebemassen (d) und (d') sind in einer bevorzugten Ausführungsform auf beiden Seiten des Haftklebebandes identisch. Es kann aber in einer speziellen Ausführungsform auch von Vorteil sein, wenn sich die Haftklebemassen (d) und (d') voneinander unterscheiden, beispielsweise durch ihre Schichtdicke und/oder ihre chemische Zusammensetzung. So lassen sich auf diesem Weg z.B. unterschiedliche haftklebrige Eigenschaften einstellen. Als Haftklebemassensysteme für das erfinderische doppelseitige Haftklebeband werden insbesondere Acrylat-, Naturkautschuk-, Synthesekautschuk-, Silikon- oder EVA-Kleber eingesetzt.

Weiterhin lassen sich auch die weiteren, dem Fachmann bekannten Haftklebemassen verarbeiten, vergleiche hierzu beispielsweise das "Handbook of Pressure Sensitive Adhesive Technology" von Donatas Satas (van Nostrand, New York 1989) zur Darstellung des Standes der Technik.

Für Naturkautschukklebemassen wird der Naturkautschuk bevorzugt bis zu einem Molekulargewicht (Gewichtsmittel) nicht unter etwa 100.000 Dalton, bevorzugt nicht unter 500.000 Dalton gemahlen und additiviert.

Bei Kautschuk/Synthesekautschuk als Ausgangsmaterial für den Kleber sind weite Variationsmöglichkeiten gegeben. Eingesetzt werden können Naturkautschuke oder Synthesekautschuke oder beliebige Blends aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der

Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

In einer erfinderisch bevorzugten Ausführungsform werden bevorzugt (Meth-)Acrylathaftklebemassen eingesetzt.

Erfindungsgemäß eingesetzte (Meth-)Acrylathaftklebemassen, welche durch radikalische Polymerisation erhältlich sind, bestehen bevorzugt zu mindestens 50 Gew.% auf zumindest einem acrylischen Monomer aus der Gruppe der Verbindungen der folgenden allgemeinen Formel:

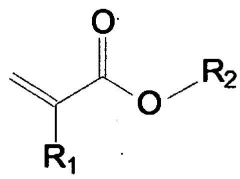

Dabei ist der Rest $R_1$ = H oder $CH_3$; und der Rest $R_2$ = H oder $CH_3$ oder wird gewählt aus der Gruppe beinhaltend die verzweigten und unverzweigten, gesättigten Alkylgruppen mit 1 - 30 Kohlenstoffatomen.

Die Monomere werden bevorzugt dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

In einer weiteren erfinderischen Ausführungsform wird die (Co-)Monomerzusammensetzung derart gewählt, dass sich die Haftklebemassen als hitzeaktivierbare Haftklebemassen einsetzen lassen.

Die Polymere lassen sich bevorzugt durch Polymerisation einer Monomermischung gewinnen, welche sich aus Acrylsäureestern und/oder Methacrylsäureestern und/oder deren freien Säuren mit der Formel $CH_2 = CH(R_1)(COOR_2)$ zusammensetzt, wobei $R_1$ = H oder $CH_3$ und $R_2$ eine Alkylkette mit 1 - 20 C-Atomen oder H ist.

Die Molmassen $M_w$ (Gewichtsmittel) der eingesetzten Polyacrylate betragen bevorzugt $M_w \geq 200.000$ g/mol.

In einer sehr bevorzugten Weise werden Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylaaylat, Isooctylmethacrylat.

Weitere einzusetzende Verbindungsklassen sind monofunktionelle Acrylate bzw. Methacrylate von überbrückten Cycloalkylalkoholen, bestehend aus zumindest 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer vorteilhaften Vorgehensweise werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere sind z.B. N,N-Dialkylsubstituierte Amide, wie z.B. N,N-Dimethylacrylamid, N, N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Butoxymethyl)methacrylamid, N-Methylolacrylamid, N-(Ethoxymethyl)acrylamid, N-Isopropylacrylamid, wobei diese Aufzählung nicht abschließend gemeint ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend gemeint ist.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren Vorgehensweise Photoinitiatoren mit einer copolymerisierbaren Doppelbindung eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebeayl P 36®). Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren die mit einer Doppelbindung funktionalisiert werden können, wird in Fouassier: "Photoinitiation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Durch die Erhöhung des aromatischen Anteils steigt der Brechungsindex der Haftklebemasse an.

Zur Weiterentwicklung können den Haftklebemassen Harze beigemischt sein. Als zuzusetzende klebrigmachende Harze sind die vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Auch hier werden zur Verbesserung der Transparenz bevorzugt transparente und sehr gut mit dem Polymer verträgliche Harze eingesetzt. Hydrierte oder teilhydrierte Harze weisen häufig diese Eigenschaften auf.

Weiterhin können optional Weichmacher (Plastifizierungsmittel), weitere Füllstoffe (wie. z. B. Fasern, Ruß, Zinkoxid, Kreide, Voll- oder Hohlglaskugeln, Mikfokugeln aus anderen Materialien, Kieselsäure, Silikate), Keimbildner, elektrisch leitfähige Materialien, wie z.B. konjugierte Polymere, dotierte konjugierte Polymere, Metallpigmente, Metallpartikel, Metallsalze, Graphit, etc., Blähmittel, Compoundierungsmittel und/oder Alterungsschutzmittel, z.B. in Form von primären und sekundären Antioxidantien oder in Form von Lichtschutzmittel zugesetzt sein.

In einer weiteren Ausführungsform der Erfindung enthält die Haftklebemasse (d) und (d') lichtabsorbierende Partikel, wie z.B. schwarze Farbpigmente oder Ruß- oder Graphitpartikel als Füllstoff.

Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer, wie z.B. Lewis-Säure, Metallchelate oder multifunktionelle Isocyanate zugesetzt sein.

Zu einer optionalen Vernetzung mit UV-Licht können den Haftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinitiatoren und andere vom Typ Norrish-I oder Norrish-II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinitiation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

**Herstellverfahren für die Acrylathaftklebemassen**

Zur Polymerisation werden die Monomere dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

Zur Erzielung einer für Haftklebemassen bevorzugten Glasübergangstemperatur $T_G$ der Polymere von $T_G \leq$ 25 °C werden entsprechend dem vorstehend gesagten die Monomere sehr bevorzugt derart ausgesucht und die mengenmäßige Zusammensetzung der Monomermischung vorteilhaft derart gewählt, dass sich nach der Gleichung (G1) in Analogie zur ***Fox***-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweilige Monomers n (Gew.-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-tert.-butylperoxid, Azodiisosäurebutyronitril, Cyclohexylsulfonylacetylperoxid, Diisopropylpercarbonat, tert.-Butylperoctoat, Benzpinacol. In einer sehr bevorzugten Ausführungsform wird als radikalischer Initiator 1,1'-Azo-bis-(cyclohexancarbonsäurenitril) (Vazo 88™ der Fa. DuPont) oder Azoisobutyronitril (AIBN) verwendet.

Die gewichtsmittleren Molekulargewichte $M_w$ der bei der radikalischen Polymerisation entstehenden Haftklebemassen werden sehr bevorzugt derart gewählt, dass sie in einem Bereich von 200.000 bis 4.000.000 g/mol liegen; speziell für die weitere Verwendung als elektrisch-leitfähiger Schmelzhaftkleber mit Rückstellvermögen werden Haftklebemassen mit mittleren Molekulargewichten $M_w$ von 400.000 bis 1.400.000 g/mol hergestellt. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die (Meth)acrylathaftklebemassen in Substanz zu polymerisieren. Hier eignet sich insbesondere die Präpolymerisationstechnik. Die Polymerisation wird mit UV-Licht initiiert, aber nur zu einem geringen Umsatz ca. 10 - 30 % geführt. Anschließend kann dieser Polymersirup z.B. in Folien eingeschweißt werden (im einfachsten Fall Eiswürfel) und dann in Wasser zu hohem Umsatz durchpolymerisiert. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im Allgemeinen durch die Struktur $P_L$(A)-Me repräsentiert, wobei Me ein Metall der Gruppe I, wie z.B. Lithium, Natrium oder Kalium, und $P_L$(A) ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Poly(meth)acrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

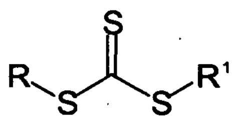

(I)

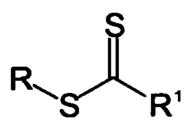

(II)

worin R und $R^1$ unabhängig voneinander gewählt oder gleich sind und

- verzweigte und unverzweigte $C_1$- bis $C_{18}$-Alkylreste, $C_3$- bis $C_{18}$-Alkenylreste; $C_3$- bis $C_{18}$-Alkinylreste;
- $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff

darstellen.

Kontrollreagenzien des Typs (I) bestehen bevorzugt aus folgenden weiter eingeschränkten Verbindungen:

Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl,

Butyl, Isobutyl, t-Butyl, Pentyl, 2-Pentyl, Hexyl, Heptyl, Octyl, 2-Ethylhexyl, tert.-Octyl, Nonyl, Decyl, Undecyl, Tridecyl, Tetradecyl, Hexadecyl und Octadecyl. Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.

Beispiele für Alkinylreste mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl oder Hydroxyhexyl. Beispiele für Halogen-substituierte Alkylreste sind Dichlorobutyl, Monobromobutyl oder Trichlorohexyl.

Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.

Als $C_3$-$C_{12}$-Cycloalkylreste dienen beispielsweise Cyclopropyl, Cyclopentyl, Cyclohexyl oder Trimethylcyclohexyl.

Als $C_6$-$C_{18}$-Arylreste dienen beispielsweise Phenyl, Naphthyl, Benzyl, 4-tert.-Butylbenzyl-oder weitere substituierte Phenyl, wie z.B. Ethyl, Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

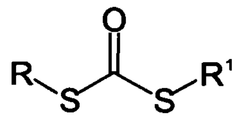

(III)

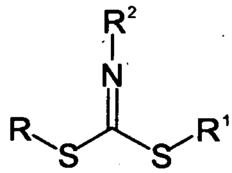

(IV)

wobei $R^2$ ebenfalls unabhängig von R und $R^1$ aus der oben aufgeführten Gruppe für diese Reste gewählt werden kann.

Beim konventionellen 'RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

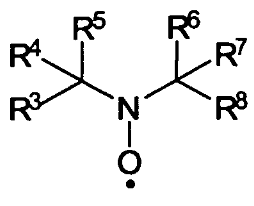

(Va)

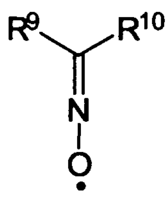

(Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod

ii) lineare, verzweigte, cyclische und heterocyclische Kohlenwasserstoffe mit 1 bis 20 Kohlenstoffatomen, die gesättigt, ungesättigt oder aromatisch sein können,

iii) Ester-$COOR^{11}$, Alkoxide $-OR^{12}$ und/oder Phosphonate $-PO(OR^{13})_2$, wobei $R^{11}$, $R^{12}$ oder $R^{13}$ für Reste aus der Gruppe ii) stehen.

Verbindungen der Formeln (Va) oder (Vb) können auch an Polymerketten jeglicher Art gebunden sein (vorrangig in dem Sinne, dass zumindest einer der oben genannten Reste eine derartige Polymerkette darstellt) und somit zum Aufbau von Polyacrylathaftklebemassen genutzt werden.

Mehr bevorzugt werden kontrollierte Regler für die Polymerisation von Verbindungen des Typs eingesetzt:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-l-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-tert.-Butylnitroxid
- Diphenylnitroxid
- tert.-Butyl-tert.-amyl Nitroxid

Eine Reihe weiterer Polymerisationsmethoden, nach denen die Haftklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten.

Als weitere kontrollierte Polymerisationsmethode lässt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

<u>Beschichtungsverfahren, Ausrüstung des Trägermaterials</u>

Zur Herstellung wird in einer bevorzugten Ausführungsform die Haftklebemasse aus Lösung auf das Trägermaterial beschichtet. Zur Steigerung der Verankerung der Haftklebemasse können optional die Schichten (b) bzw. (c) vorbehandelt werden. So kann z.B. mit Corona oder mit Plasma vorbehandelt werden, es kann aus der Schmelze oder aus Lösung ein Primer aufgetragen werden oder es kann chemisch geätzt werden. Insbesondere bei der schwarzen Lackschicht sollte aber die Corona-Leistung minimiert werden, da ansonsten Pinholes in die Folie hineingebrannt werden. Für die Beschichtung der Haftklebemasse aus Lösung wird über Wärmezufuhr z.B. in einem Trockenkanal das Lösemittel entfernt und gegebenenfalls die Vernetzungsreaktion initiiert.

Die oben beschriebenen Polymere können weiterhin auch als Hotmelt-Systeme (also aus der Schmelze) beschichtet werden. Für das Herstellungsverfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Der Hotmelt wird aus der Schmelze weiterverarbeitet.

Zur Beschichtung als Hotmelt können unterschiedliche Beschichtungsverfahren herangezogen werden. In einer Ausführung werden die Haftklebemassen über ein Walzenbeschichtungsverfahren beschichtet. Unterschiedliche Walzenbeschichtungs-verfahren sind im "Handbook of Pressure Sensitive Adhesive Technology" von Donatas Satas (van Nostrand, New York 1989) beschrieben. In einer weiteren Ausführung wird über eine Schmelzdüse beschichtet. In einem weiteren bevorzugten Verfahren wird durch Extrusion beschichtet. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals.

Durch die Beschichtung können die Haftklebemassen auch eine Orientierung erfahren.

Weiterhin kann es erforderlich sein, dass die Haftklebemasse vernetzt wird. In einer bevorzugten Ausführung wird mit actinischer Strahlung vernetzt.

Zur UV-Vernetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators und dem einzustellenden Vernetzungsgrad angepasst.

Weiterhin werden die Haftklebemassen in einer vorteilhaften Ausführungsform der Erfindung mit Elektronenstrahlen vernetzt. Typische Bestrahlungsvorrichtungen, die vorteilhaft eingesetzt werden, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 und 150 kGy, insbesondere zwischen 20 und 100 kGy. Es können auch beide Vernetzungsverfahren angewendet werden oder andere Verfahren, die hochenergetische Bestrahlung ermöglichen.

Weiterhin ist Gegenstand der Erfindung die Verwendung der erfinderischen doppelseitigen Haftklebebänder zur Verklebung oder Herstellung von LC-Displays. Für die Verwendung als Haftklebeband können die doppelseitigen Haftklebebänder mit einem oder zwei Trennfolien oder Trennpapieren abgedeckt sein. In einer bevorzugten Ausführungsform werden silikonisierte oder fluorierte Folien oder Papiere, wie z.B. Glassine, HPDE oder LDPE gecoatete Papiere eingesetzt, die wiederum mit einer Releaseschicht basierend auf Silikonen oder fluorierten Polymeren versehen ist.

Insbesondere vorteilhaft sind die erfindungsgemäßen Haftklebebänder zur Verklebung von Leuchtdioden (Light Emitting Diode, LED) als Lichtquelle mit dem LCD-Modul geeignet.

**Beispiele**

Die Erfindung wird im Folgenden beschrieben, ohne sich durch die Wahl der Beispiele unnötig beschränken zu wollen.

Folgende Testmethoden wurden angewendet.

Prüfmethoden

A. Transmission

Die Transmission wurde im Wellenlängenbereich von 190 bis 900 nm mit einem Uvikon 923 der Fa. Biotek Kontron an einem auf 50 μm Polyolefinfolie aufgetragenen 100 μm dicken Probenfilm und gegen eine unbeschichtete Polyolefinfolienreferenz gemessen. Die Messung wird bei 23 °C durchgeführt. Die Absolute Transmission wird als Wert bei 550 nm in % angegeben bezogen auf die vollständige Lichtabsorption (Transmission 0 % = kein Lichtdurchlass; Transmission 100 % = vollständiger Lichtdurchlass).

B. Laserpointer Test

Mit einem handelsüblichen Laserpointer (Laser Diode Class II, Wellenlänge 650 nm, Laserleistung 0.6 mW, Fa. Conrad Laser Pointer LP 6 Mini) wird senkrecht aus einem Abstand von 5 cm auf eine Probe des doppelseitigen erfindungsgemäßen Haftklebebandes gestrahlt. Von der anderen Seite des Haftklebebandes wird beurteilt, ob das Laserlicht das Haftklebeband durchdringt oder nicht, indem auf einem weißen Blatt Papier, welches sich in einem Abstand von 5 cm parallel zu dem Haftklebeband befindet, beobachtet wird, ob sich der Laserstrahl auf dieser Seite noch bricht oder nicht.

Der Test gilt als bestanden, wenn optisch nicht zu erkennen ist, dass der Laserlicht das Klebeband durchdringen kann, wenn auf dem Papier also kein Lichtpunkt detektiert werden kann.

Polymer 1

Ein für radikalische Polymerisationen konventioneller 200 L-Reaktor wurde mit 2400 g Acrylsäure, 64 kg 2-Ethylhexylacrylat, 6,4 kg N-Isopropylacrylamid und 53,3 kg Aceton/Isopropanol (95:5) befüllt. Nach 45 Minuten Durchleiten von Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurden erneut 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohe1xylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt.

Polymer 2

Ein für radikalische Polymerisationen konventioneller 200 L-Reaktor wurde mit 1200 g Acrylsäure, 74 kg 2-Ethylhexylacrylat, 4,8 kg N-Isopropylacrylamid und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurden erneut 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt.

Vernetzung

Die Haftklebemassen wurden aus Lösung auf ein silikonisiertes Trennpapier (PE-gecoatetes Trennpapier der Fa. Loparex) beschichtet, für 10 Minuten im Trockenschrank bei 100 °C getrocknet und anschließend mit Elektronenstrahlen einer Dosis von 25 kGy bei einer Beschleunigungsspannung von 200 kV vernetzt. Der Masseauftrag betrug jeweils 50 g/m$^2$

Folie (Farbbeschichtung):

Eine 12 μm PET-Folie wird mit dem Walzendruckverfahren beschichtet. Die jeweiligen Farbschichten werden in verschiedenen Schritten aufgebracht. Der Prozess der Aufbringung der verschiedenen Farbschichten (b) und (c) erfolgt bevorzugt in einem Arbeitsdurchgang.

Der Masseauftrag pro Lackschicht betrug ca. 1,2 g/m$^2$.

Nach dem beschriebenen Verfahren wurden die in Figur 5 und 6 skizzierten Folien hergestellt (Benennung in Folgenden: Folie gemäß Figur 5 = Folie 5, Folie gemäß Figur 6 = Folie 6).

Beispiel 1

Die Folie 5 wird im Kaschierverfahren mit dem Polymer 1 beidseitig mit 50 g/m$^2$ beschichtet.

Beispiel 2

Die Folie 5 wird im Kaschierverfahren mit dem Polymer 2 beidseitig mit 50 g/m$^2$ beschichtet.

Beispiel 3

Die Folie 6 wird im Kaschierverfahren mit dem Polymer 1 beidseitig mit 50 g/m$^2$ beschichtet.

Beispiel 4

Die Folie 6 wird im Kaschierverfahren mit dem Polymer 2 beidseitig mit 50 g/m$^2$ beschichtet.

**Ergebnisse**

Weiterhin wurden mit den Beispielen 1 bis 4 der Test B und C durchgeführt. Die Ergebnisse sind in Tabelle 1 dargestellt.

Tabelle 1

| Beispiel | Transmission (Test B) | Laserpointer (Test C) |
|---|---|---|
| 1 | < 1 % | Bestanden |
| 2 | < 1 % | Bestanden |
| 3 | < 1 % | Bestanden |
| 4 | < 1 % | Bestanden |

Den Ergebnissen aus Tabelle 1 kann entnommen werden, dass die Beispiele 1 bis 4 sehr gut die lichtabsorbierende Funktion erfüllen und vollständig das Licht absorbieren.

Zur Überprüfung der klebtechnischen Eignung wurden mit den Beispielen 1 bis 4 auch anwendungstechnische Verklebungen erprobt. Alle Beispiele wurden daher zur Verklebung von LCD-Panels auf Backlight Units eingesetzt. Es konnte keine Lichttransmission durch das Tape beobachtet werden.

**Patentansprüche**

1. Haftklebeband, insbesondere zur Herstellung oder Verklebung von optischen Flüssigkristall-Datenanzeigen (LCDs), aufweisend eine Ober- und eine Unterseite, weiterhin aufweisend eine Trägerfolie mit einer Ober- und einer Unterseite, wobei das Haftklebeband sowohl auf seiner Ober- und seiner Unterseite mit jeweils zumindest einer äußeren Haftklebemassenschicht ausgerüstet ist, **dadurch gekennzeichnet, dass** zumindest auf einer Seite der Folie zwischen zumindest einer der äußeren Haftklebemassenschichten und der Trägerfolie zumindest zwei schwarze Schichten vorgesehen sind, zwischen denen zumindest eine silberfarbene Lackschicht auf Basis einer aushärtenden Bindermatrix umfassend silberne Farbpigmente vorhanden ist.

2. Haftklebeband nach Anspruch 1, **dadurch gekennzeichnet, dass** zumindest eine der beiden äußeren Haftklebeschichten transparent ist, insbesondere diejenige auf derjenigen Seite des Haftklebebandes, auf welcher die zumindest zwei schwarzen Schichten mit der dazwischen liegenden silberfarbenen Lackschicht befinden.

3. Haftklebeband nach Anspruch 1, **dadurch gekennzeichnet, dass** es sich bei einer oder beiden schwarzen Schichten um Lackschichten handelt.

4. Haftklebeband nach zumindest einem der vorangehenden Ansprüche, **dadurch gekennzeichnet, dass** weitere schwarze Schichten in dem Klebeband vorgesehen sind

5. Haftklebeband nach zumindest einem der vorangehenden Ansprüche, **dadurch gekennzeichnet, dass** eine Trägerfolie mit einer Dicke zwischen 5 und 100 µm, bevorzugt zwischen 8 und 50 µm, sehr bevorzugt zwischen 12 und 23 µm eingesetzt wird, insbesondere 12 µm dick ist..

6. Haftklebeband nach zumindest einem der vorangehenden Ansprüche, **dadurch gekennzeichnet, dass**

die Flächenmasse einer oder mehrerer der schwarzen Schichten zwischen 0,5 und 3 g/m$^2$ beträgt.

**7.** Haftklebeband nach zumindest einem der vorangehenden Ansprüche, **dadurch gekennzeichnet, dass** die Flächenmasse der zumindest einen silberfarbenen Lackschicht zwischen 0,5 und 3 g/m$^2$ beträgt.

**8.** Haftklebeband nach zumindest einem der vorangehenden Ansprüche, **dadurch gekennzeichnet, dass** die silberne Farbe der silberfarbenen Lackschicht durch Metallpartikel bewirkt wird.

**9.** Haftklebeband nach zumindest einem der vorangehenden Ansprüche, **gekennzeichnet durch** die folgende Schichtenabfolge:

Haftklebemasse (Schicht d) - schwarze Lackschicht (Schicht b) - silberfarbene Lackschicht (Schicht c) - schwarze Lackschicht (Schicht b) - Trägerfolie (Schicht a) - Haftklebemasse (Schicht d').

**10.** Haftklebeband nach zumindest einem der vorangehenden Ansprüche, **gekennzeichnet durch** die folgende Schichtenabfolge:

Haftklebemasse (Schicht d) - schwarze Lackschicht (Schicht b) - silberfarbene Lackschicht (Schicht c) - schwarze Lackschicht (Schicht b) - Trägerfolie (Schicht a) - schwarze Lackschicht (Schicht b) - silberfarbene Lackschicht (Schicht c) - schwarze Lackschicht (Schicht b) - Haftklebemasse (Schicht d').

**11.** Haftklebeband nach zumindest einem der vorangehenden Ansprüche 1-9, **gekennzeichnet durch** die folgende Schichtenabfolge:

Haftklebemasse (Schicht d) - schwarze Lackschicht (Schicht b) - silberfarbene Lackschicht (Schicht c) - schwarze Lackschicht (Schicht b) - Trägerfolie (Schicht a) - schwarze Lackschicht (Schicht b) - Haftklebemasse (Schicht d').

**12.** Haftklebeband nach zumindest einem der vorangehenden Ansprüche 1-9 **gekennzeichnet durch** die folgende Schichtenabfolge:

Haftklebemasse (Schicht d) - zweite schwarze Lackschicht (Schicht $b_2$) - erste schwarze Lackschicht (Schicht $b_1$) - silberfarbene Lackschicht (Schicht c) - schwarze Lackschicht (Schicht b) - Trägerfolie (Schicht a) - Haftklebemasse (Schicht d').

**13.** Haftklebeband nach zumindest einem der vorangehenden Ansprüche 1-9 **gekennzeichnet durch** die folgende Schichtenabfolge:

Haftklebemasse (Schicht d) - zweite schwarze Lackschicht (Schicht $b_2$) - erste schwarze Lackschicht (Schicht $b_1$) - silberfarbene Lackschicht (Schicht c) - schwarze Lackschicht (Schicht b) - Trägerfolie (Schicht a) - schwarze Lackschicht (Schicht b) - Haftklebemasse (Schicht d').

**14.** Haftklebeband nach zumindest einem der vorangehenden Ansprüche, **gekennzeichnet durch** die folgende Schichtenabfolge:

Haftklebemasse (Schicht d) - zweite schwarze Lackschicht (Schicht $b_2$) - erste schwarze Lackschicht (Schicht $b_1$) - silberfarbene Lackschicht (Schicht c) - schwarze Lackschicht (Schicht b) - Trägerfolie (Schicht a) - schwarze Lackschicht (Schicht b) - silberfarbene Lackschicht (Schicht c) - erste schwarze Lackschicht (Schicht $b_1$) - zweite schwarze Lackschicht (Schicht $b_2$) - Haftklebemasse (Schicht d').

**15.** Verwendung eines Haftklebebandes nach zumindest einem der vorstehenden Ansprüche zur Herstellung oder Verklebung einer optischen Flüssigkristall-Datenanzeige.

**16.** Verwendung nach Anspruch 15 zur Verklebung von LCD-Gläsern.

**17.** Flüssigkristall-Datenanzeige-Gerät aufweisend ein Haftklebeband nach zumindest einem der Ansprüche 1 bis 14.

## Claims

1. Pressure-sensitive adhesive tape, in particular for the production or adhesive bonding of optical liquid-crystal displays (LCDs), comprising a top side and a bottom side, further comprising a carrier film having a top side and a bottom side, the pressure-sensitive adhesive tape being furnished both on its top side and on its bottom side with at least one external pressure-sensitive adhesive layer in each case, **characterized in that** provided at least on one side of the film, between at least one of the outer pressure-sensitive adhesive layers and the carrier film, are at least two black layers between which there is at least one silver-colored paint layer based on a curing binder matrix comprising silver color pigments.

2. Pressure-sensitive adhesive tape according to Claim 1, **characterized in that**
at least one of the two outer pressure-sensitive adhesive layers is transparent, more particularly the layer on the side of the pressure-sensitive adhesive tape on which the at least two black layers with the silver-colored paint layer in between are located.

3. Pressure-sensitive adhesive tape according to Claim 1, **characterized in that**
one or both black layers are paint layers.

4. Pressure-sensitive adhesive tape according to at least one of the preceding claims, **characterized in that**
there are further black layers provided in the adhesive tape.

5. Pressure-sensitive adhesive tape according to at least one of the preceding claims, **characterized in that**
a carrier film having a thickness between 5 and 100 $\mu$m, preferably between 8 and 50 $\mu$m, very preferably between 12 and 23 $\mu$m is used, and in particular is 12 $\mu$m thick.

6. Pressure-sensitive adhesive tape according to at least one of the preceding claims, **characterized in that**
the areal mass of one or more of the black layers is between 0.5 and 3 g/$m^2$.

7. Pressure-sensitive adhesive tape according to at least one of the preceding claims, **characterized in that**
the areal mass of the at least one silver-colored paint layer is between 0.5 and 3 g/$m^2$.

8. Pressure-sensitive adhesive tape according to at least one of the preceding claims, **characterized in that**
the silver color of the silver-colored paint layer is produced by metal particles.

9. Pressure-sensitive adhesive tape according to at least one of the preceding claims, **characterized by** the following layer sequence:

   pressure-sensitive adhesive (layer d) - black paint layer (layer b) - silver-colored paint layer (layer c) - black paint layer (layer b) - carrier film (layer a) - pressure-sensitive adhesive (layer d').

10. Pressure-sensitive adhesive tape according to at least one of the preceding claims, **characterized by** the following layer sequence:

    pressure-sensitive adhesive (layer d) - black paint layer (layer b) - silver-colored paint layer (layer c) - black paint layer (layer b) - carrier film (layer a) - black paint layer (layer b) - silver-colored paint layer (layer c) - black paint layer (layer b) - pressure-sensitive adhesive (layer d').

11. Pressure-sensitive adhesive tape according to at least one of the preceding Claims 1 to 9, **characterized by** the following layer sequence:

    pressure-sensitive adhesive (layer d) - black paint layer (layer b) - silver-colored paint layer (layer c) - black paint layer (layer b) - carrier film (layer a) - black paint layer (layer b) - pressure-sensitive adhesive (layer d').

12. Pressure-sensitive adhesive tape according to at least one of the preceding Claims 1 to 9, **characterized by** the following layer sequence:

    pressure-sensitive adhesive (layer d) - second black paint layer (layer $b_2$) - first black paint layer (layer $b_1$) - silver-colored paint layer (layer c) - black paint layer (layer b) - carrier film (layer a) - pressure-sensitive adhesive

(layer d').

**13.** Pressure-sensitive adhesive tape according to at least one of the preceding Claims 3, **characterized by** the following layer sequence:

pressure-sensitive adhesive (layer d) - second black paint layer (layer $b_2$) - first black paint layer (layer $b_1$) - silver-colored paint layer (layer c) - black paint layer (layer b) - carrier film (layer a) - black paint layer (layer b) - pressure-sensitive adhesive (layer d').

**14.** Pressure-sensitive adhesive tape according to at least one of the preceding claims, **characterized by** the following layer sequence:

pressure-sensitive adhesive (layer d) - second black paint layer (layer $b_2$) - first black paint layer (layer $b_1$) - silver-colored paint layer (layer c) - black paint layer (layer b) - carrier film (layer a) - black paint layer (layer b) - silver-colored paint layer (layer c) - first black paint layer (layer $b_1$) - second black paint layer (layer $b_2$) - pressure-sensitive adhesive (layer d').

**15.** Use of a pressure-sensitive adhesive tape according to at least one of the above claims for producing or adhesively bonding an optical liquid-crystal display.

**16.** Use according to Claim 15 for adhesively bonding LCD glasses.

**17.** Liquid-crystal display device comprising a pressure-sensitive adhesive tape according to at least one of Claims 1 to 14.

**Revendications**

**1.** Bande autoadhésive, en particulier pour la réalisation ou pour un collage d'affichages optiques à cristaux liquides (LCD), présentant une face supérieure et une face inférieure, présentant en outre une feuille support avec une face supérieure et une face inférieure, la bande autoadhésive étant apprêtée, tant sur sa surface supérieure que sur sa surface inférieure, avec à chaque fois au moins une couche de masse autoadhésive extérieure, **caractérisée en ce qu'**au moins sur une face de la feuille entre au moins une des couches de masse autoadhésive extérieures et la feuille support, au moins deux couches noires sont prévues, entre lesquelles au moins une couche de laque de couleur argentée à base d'une matrice de liant durcissable comprenant des pigments colorés argentés est présente.

**2.** Bande autoadhésive selon la revendication 1, **caractérisée en ce qu'**au moins une des deux couches autoadhésives extérieures est transparente, en particulier celle se trouvant sur la face de la bande autoadhésive sur laquelle se trouvent lesdites au moins deux couches noires avec une couche de laque argentée se trouvant entre celles-ci.

**3.** Bande autoadhésive selon la revendication 1, **caractérisée en ce qu'**il s'agit, pour une ou les deux couches noires, de couches de laque.

**4.** Bande autoadhésive selon au moins l'une quelconque des revendications précédentes, **caractérisée en ce que** d'autres couches noires sont prévues dans la bande adhésive.

**5.** Bande autoadhésive selon au moins l'une quelconque des revendications précédentes, **caractérisée en ce qu'**une feuille support présentant une épaisseur entre 5 et 100 $\mu$m, de préférence entre 8 et 50 $\mu$m, très préférablement entre 12 et 23 $\mu$m est utilisée, en particulier d'une épaisseur de 12 $\mu$m.

**6.** Bande autoadhésive selon au moins l'une quelconque des revendications précédentes, **caractérisée en ce que** la masse surfacique d'une ou de plusieurs des couches noires est située entre 0,5 et 3 g/$m^2$.

**7.** Bande autoadhésive selon au moins l'une quelconque des revendications précédentes, **caractérisée en ce que** la masse surfacique de ladite au moins une couche de laque argentée est située entre 0,5 et 3 g/$m^2$.

**8.** Bande autoadhésive selon au moins l'une quelconque des revendications précédentes, **caractérisée en ce que** la couleur argentée de la couche de laque argentée est provoquée par des particules métalliques.

**9.** Bande autoadhésive selon au moins l'une quelconque des revendications précédentes, **caractérisée par** l'ordre des couches suivait :

masse autoadhésive (couche d) - couche de laque noire (couche b) - couche de laque argentée (couche c) - couche de laque noire (couche b) - feuille support (couche a) - masse autoadhésive (couche d').

**10.** Bande autoadhésive selon au moins l'une quelconque des revendications précédentes, **caractérisée par** l'ordre des couches suivait :

masse autoadhésive (couche d) - couche de laque noire (couche b) - couche de laque argentée (couche c) - couche de laque noire (couche b) - feuille support (couche a) - couche de laque noire (couche b) - couche de laque argentée (couche c) - couche de laque noire (couche b) - masse autoadhésive (couche d').

**11.** Bande autoadhésive selon au moins l'une quelconque des revendications précédentes 1-9, **caractérisée par** l'ordre des couches suivant :

masse autoadhésive (couche d) - couche de laque noire (couche b) - couche de laque argentée (couche c) - couche de laque noire (couche b) - feuille support (couche a) - couche de laque noire (couche b) - masse autoadhésive (couche d').

**12.** Bande autoadhésive selon au moins l'une quelconque des revendications précédentes 1-9, **caractérisée par** l'ordre des couches suivant :

masse autoadhésive (couche d) - deuxième couche de laque noire (couche $b_2$) - première couche de laque noire (couche $b_1$) - couche de laque argentée (couche c) - couche de laque noire (couche b) - feuille support (couche a) - masse autoadhésive (couche d').

**13.** Bande autoadhésive selon au moins l'une quelconque des revendications précédentes 1-9, **caractérisée par** l'ordre des couches suivant :

masse autoadhésive (couche d) - deuxième couche de laque noire (couche $b_2$) - première couche de laque noire (couche $b_1$) - couche de laque argentée (couche c) - couche de laque noire (couche b) - feuille support (couche a) - couche de laque noire (couche b) - masse autoadhésive (couche d').

**14.** Bande autoadhésive selon au moins l'une quelconque des revendications précédentes, **caractérisée par** l'ordre des couches suivant :

masse autoadhésive (couche d) - deuxième couche de laque noire (couche $b_2$) - première couche de laque noire (couche $b_1$) - couche de laque argentée (couche c) - couche de laque noire (couche b) - feuille support (couche a) - couche de laque noire (couche b) - couche de laque argentée (couche c) - première couche de laque noire (couche $b_1$) - deuxième couche de laque noire (couche $b_2$) - masse autoadhésive (couche d').

**15.** Utilisation d'une bande autoadhésive selon au moins l'une quelconque des revendications précédentes pour la réalisation ou pour le collage d'affichages optiques à cristaux liquides.

**16.** Utilisation selon la revendication 15 pour le collage d'écrans LCD.

**17.** Appareil d'affichage à cristaux liquides présentant une bande autoadhésive selon au moins l'une quelconque des revendications 1 à 14.

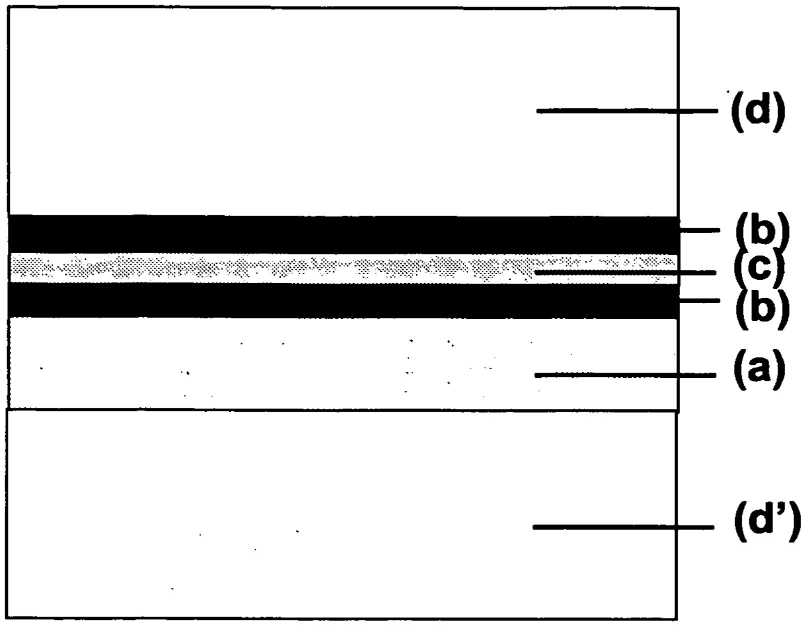


Fig. 1

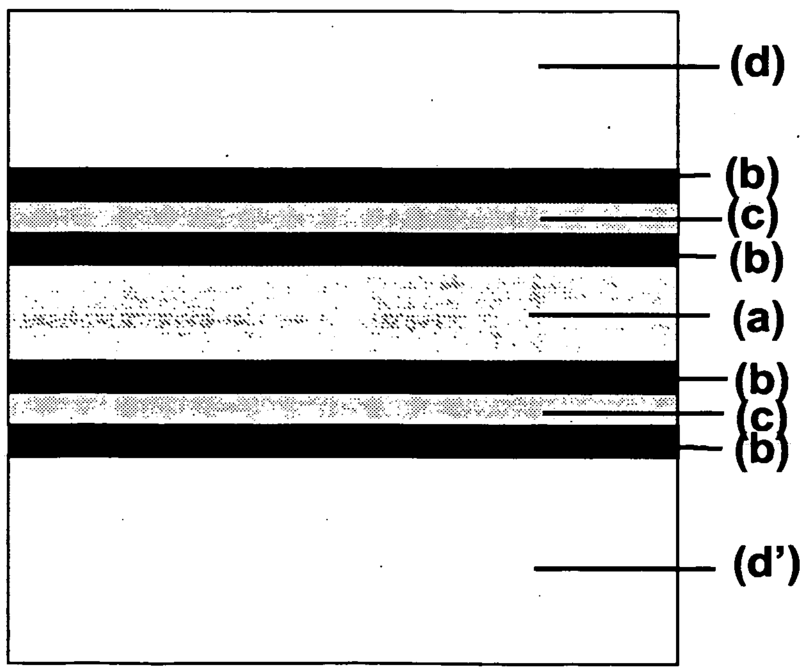


Fig. 2

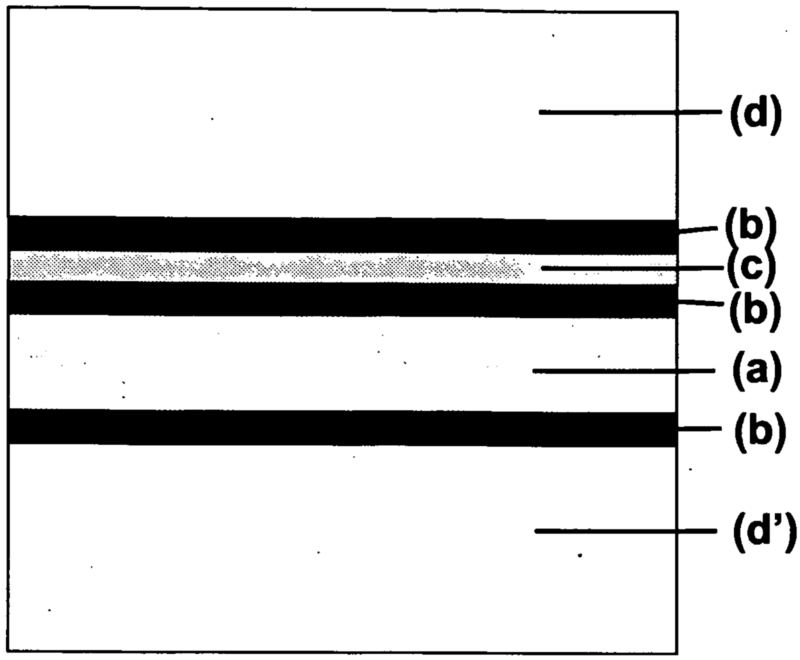


Fig. 3

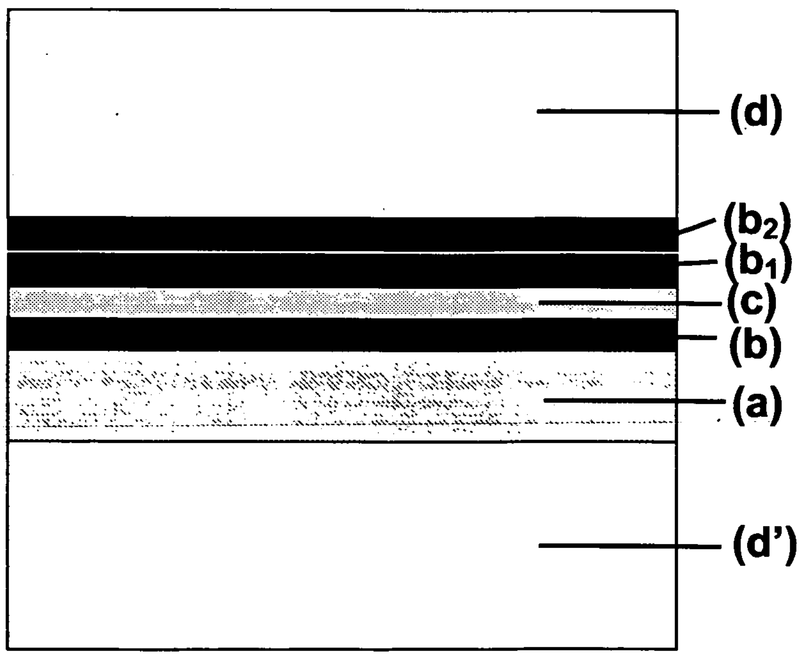


Fig. 4

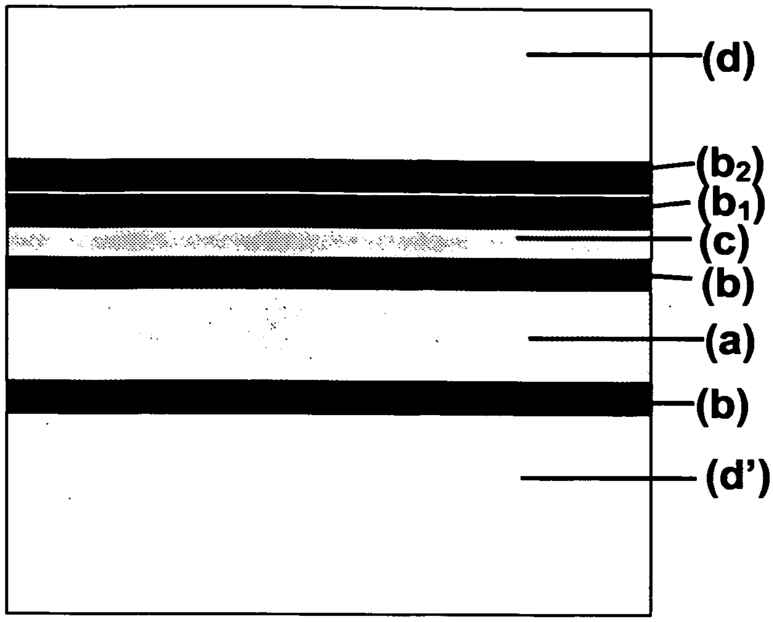


Fig. 5

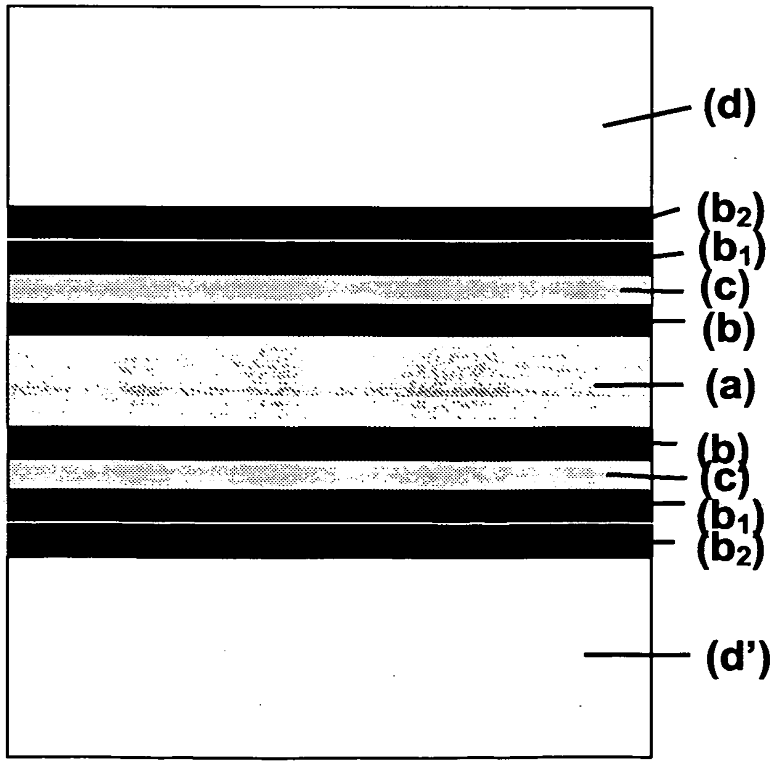


Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2002235053 A
- JP 2002350612 A
- US 2004028895 A
- WO 2005019367 A
- JP 2002023663 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- Handbook of Pressure Sensitive Adhesive Technology. 1989
- **Fouassier.** Photoinitiation, Photopolymerization and Photocuring: Fundamentals and Applications. Hanser-Verlag, 1995
- **Carroy et al.** Chemistry and Technology of UV and EB Formulation for Coatings, Inks and Paints. SITA, 1994
- **T.G. Fox.** *Bull. Am. Phys. Soc.,* 1956, vol. 1, 123
- **Houben Weyl.** *Methoden der Organischen Chemie,* vol. E 19a, 60-147
- *Macromolecules,* 1995, vol. 28, 7886
- Electron Beam Processing, in Chemistry and Technology of UV and EB formulation for Coatings. **Skelhorne.** Inks and Paints. SITA, 1991, vol. 1